# FASCICULE DE BREVET EUROPEEN

(11) **EP 3 304 705 B1**
(45) Date de publication et mention de la délivrance du brevet: **29.04.2020**
(21) Numéro de dépôt: 16725490.3
(22) Date de dépôt: 23.05.2016
(51) Int. Cl.: H02K 21/22, H02K 1/18, H02K 5/173, H02K 11/22

(54) **MOTEUR ELECTRIQUE A COMMUTATION ELECTRONIQUE ET DISPOSITIF DE PULSION D'AIR CORRESPONDANT**
ELEKTRONISCH KOMMUTIERTER ELEKTROMOTOR UND DAZUGEHÖRIGE LUFTPULSVORRICHTUNG
ELECTRONICALLY SWITCHED ELECTRIC MOTOR AND CORRESPONDING AIR PULSE DEVICE

(30) Priorité: 29.05.2015 FR 1554873
(43) Date de publication de la demande: 11.04.2018
(73) Titulaire: Valeo Systemes Thermiques, 78320 Le Mesnil Saint Denis (FR)
(72) Inventeur: GUIGOU, Pascal, 78322 Le Mesnil Saint-Denis Cedex (FR); CAPOULUN, Geoffroy, 78322 Le Mesnil Saint-Denis Cedex (FR); ROUSSEIL, Xavier, 78322 Le Mesnil Saint-Denis Cedex (FR); FOURNIER, Jonathan, 78322 Le Mesnil Saint-Denis Cedex (FR); LE GOFF, Morgan, 78322 Le Mesnil Saint-Denis Cedex (FR)
(74) Mandataire: Tran, Chi-Hai
(86) Numéro de dépôt international: PCT/EP2016/061617
(87) Numéro de publication internationale: WO 2016/193047

(56) Documents cités:
- WO-A2-2013/098309
- DE-A1-102013 001 339
- FR-A1- 2 679 076
- GB-A- 2 092 834

## Description

La présente invention se rapporte au domaine des moteurs électriques, et notamment à celui des moteurs à commutation électronique. Plus spécifiquement, elle concerne des dispositifs de pulsion d'air dans des véhicules automobiles comportant de tels moteurs électriques.

Un dispositif de pulsion d'air équipé d'un moteur électrique selon l'invention est, par exemple, utilisé dans un système de ventilation, de chauffage et/ou de climatisation d'un véhicule automobile.

Les moteurs électriques à commutation électronique, ou moteurs à courant continu sans balai (connu également sous la dénomination anglaise de « brushless »), comportent un ensemble rotor et stator, chacun de ces composants étant porteur d'éléments électromagnétiques dont l'interaction génère le déplacement du rotor relativement au stator. Le rotor et le stator sont montés indépendamment l'un de l'autre dans ledit moteur, et il convient de s'assurer que le positionnement relatif de ces deux composants est correct pour un fonctionnement optimal du moteur. Ces deux composants, en fonctionnement, génèrent des rayonnements électromagnétiques qui peuvent perturber le fonctionnement d'autres appareils électroniques disposés à proximité.

Les documents DE102013001339, GB2092834 A, WO 2013/098309 A2 divulguent des moteurs électrique avec des écrans disposé au voisinage du stator.

FR2679076 A1 divulgue un moteur électrique à commutation électronique dans lequel la face interne de la paroi centrale définissant ledit alésage interne présente au moins une nervure qui s'étend radialement vers l'intérieur de l'alésage.

La présente invention s'inscrit dans ce contexte et elle vise à proposer un moteur électrique et un dispositif de pulsion d'air associé qui permettent de limiter la propagation d'ondes électromagnétiques hors du dispositif de pulsion d'air.

Par dispositif de pulsion d'air, on comprend un dispositif permettant d'aspirer et/ou de souffler de l'air.

Le dispositif de pulsion d'air selon l'invention est du type comportant une roue de ventilation entraînée en rotation par un arbre de sortie d'un moteur électrique à commutation électronique, avec le moteur constitué d'au moins un rotor solidaire en rotation de l'arbre de sortie et adapté pour tourner autour d'un stator. Le stator présente une forme annulaire avec une paroi centrale qui délimite le contour d'un alésage interne par lequel passe ledit arbre de sortie, et il comporte en outre une pluralité de dents agencées radialement en étoile depuis la face externe de ladite paroi centrale et portant chacune une bobine magnétique génératrice d'un champ électromagnétique, lesdites dents présentant à leur extrémité distale, à l'opposé de la paroi centrale, des plaques métalliques qui s'étendent sensiblement parallèlement à l'axe de l'arbre de sortie. Notamment, on peut prévoir que chaque plaque métallique est agencée de manière à ce qu'une zone de passage pour l'enroulement de la bobine soit formée entre deux plaques métalliques voisines. Le rotor, agencé autour du stator, est porteur d'au moins un aimant permanent dont l'interaction avec lesdites bobines alimentées en courant génère un mouvement de rotation du rotor autour du stator.

Selon l'invention, il est prévu d'une part que le stator, notamment la face interne de la paroi centrale dudit stator, est en contact avec un moyen support autour duquel le stator est monté, ledit moyen support étant conducteur et connecté électriquement à une masse électrique, et il est prévu d'autre part qu'au moins un écran soit disposé au voisinage du stator, ledit écran étant également connecté électriquement à la masse électrique.

Cet agencement permet la formation d'une enceinte conductrice reliée à la masse électrique, et donc maintenue à un potentiel fixe, de manière à former un blindage apte à confiner à l'intérieur du dispositif de pulsion d'air le champ électrique créé par la commutation de courant dans les bobines du stator génère des champs électriques

Selon une première série de caractéristiques, prises seules ou en combinaison, propres à la connexion électrique du stator sur le moyen support, on pourra prévoir que :
- la face interne de la paroi centrale définissant ledit alésage interne présente au moins une nervure qui s'étend radialement vers l'intérieur de l'alésage ;
- cette nervure présente deux faces latérales prolongeant chacune ladite face interne de la paroi centrale et une face de contact apte à être au contact du moyen support ;
- la face de contact est incurvée de telle sorte que la courbure de la face de contact est définie par un cercle centré sur l'axe de l'alésage interne ;
- la au moins une nervure est prolongée, sensiblement en direction de l'axe de l'alésage interne, par un ergot qui s'étend en saillie de la face de contact ;
- la face interne de la paroi centrale définissant l'alésage central comporte au moins trois nervures disposées selon une répartition angulaire régulière ;
- l'alésage interne du stator présente une forme tronconique, telle que l'alésage présente un plus grand diamètre à son extrémité tournée vers la platine qu'à son extrémité tournée vers le rotor.

Avantageusement, il est prévu que le moyen support soit formé d'une pièce unique comportant un fût et une platine, le fût, autour duquel est monté le stator, et dans lequel est monté à rotation ledit arbre de sortie solidaire du rotor, s'étendant en saillie de la platine disposée transversalement d'un côté du stator opposé au côté dudit rotor. Le fait d'avoir une pièce unique qui serve de moyen support du stator et du rotor permet d'obtenir une bonne coaxialité entre le rotor et le stator, de sorte que l'on limite ainsi des risques de dysfonctionnement du moteur tels qu'une alternance de phases d'accélération et de phases de ralentissement.

On pourra prévoir dans ce contexte que l'arbre de sortie dudit moteur est monté à rotation à l'intérieur du fût par l'intermédiaire de roulements. Et la platine du moyen support pourra former un dissipateur thermique porteur d'une carte électronique de commande, notamment de l'alimentation des bobines du stator, la carte électronique de commande étant alors disposée sur la face de la platine orientée à l'opposé du fût.

Selon une deuxième série de caractéristiques, prises seules ou en combinaison entre elles et avec la première série de caractéristiques évoquées ci-dessus, on pourra prévoir que l'écran est disposé transversalement à l'arbre de sortie, entre le rotor et le stator.
- l'écran s'étend radialement sur tout le diamètre du stator. ;
- l'écran présente une forme annulaire sensiblement plane, percée en son centre d'un alésage pour être traversée par l'arbre de sortie moteur ;
- l'écran est fixé sur le stator, par au moins une vis de fixation apte à coopérer avec un trou formé dans le stator ;
- l'alésage interne du stator présente deux parties distinctes par modification du diamètre interne de la paroi centrale délimitant ledit alésage interne, une première partie de plus grand diamètre s'étendant depuis le bord disposé axialement au voisinage de l'écran jusqu'à un bord d'épaulement délimitant une deuxième partie de plus petit diamètre, ledit trou coopérant avec la vis de fixation étant formé dans le bord d'épaulement ;
- l'écran comporte au moins une patte qui prolonge sensiblement perpendiculairement le bord délimitant l'alésage central de l'écran, et dont l'extrémité libre présente un bord d'appui, de sorte que la patte vienne au contact du bord d'épaulement par ce bord d'appui lorsque l'écran est en position de recouvrement du stator ;
- le bord d'appui est agencé pour laisser passage au corps de vis de fixation dans le trou de fixation et être plaqué contre le bord d'épaulement par la tête de vis ;
- trois trous de fixation sont régulièrement réparties à 120° sur le pourtour de l'alésage interne du stator ;
- l'écran est connecté à un potentiel électrique sensiblement nul par l'intermédiaire de ladite au moins une vis de fixation qui s'étend sensiblement parallèlement à l'arbre de sortie moteur, en traversant ledit stator pour venir en prise sur ledit moyen support ;
- le stator présente au moins un bossage axial disposé en saillie de la face interne de la paroi centrale définissant l'alésage interne dudit stator, ledit bossage étant percé axialement du trou de fixation apte à être traversé par la au moins une vis de fixation ;
- l'écran est réalisé en un matériau électriquement conducteur, qui peut être à titre d'exemple de l'aluminium.

On pourra également prévoir que l'écran ayant fait l'objet de la deuxième série de caractéristiques donnée ci-dessus est un premier écran formant partie d'une couverture du stator qui comporte en outre un deuxième écran, disposé en couverture du stator du côté axial du stator opposé au côté couvert par le premier écran, entre ledit stator et le moyen support.

Selon différentes variantes de réalisation, ce deuxième écran peut s'étend transversalement ou parallèlement à l'arbre de sortie du moteur.

Dans le premier cas, avec un deuxième écran s'étendant transversalement, il pourra être prévu que le deuxième écran s'étend radialement sur tout le diamètre du stator ; le deuxième écran pourra là aussi présenter une forme annulaire sensiblement plane, percée en son centre pour être traversée par l'arbre de sortie moteur. Et le deuxième écran pourra être fixé sur le stator.

Dans le deuxième cas, avec un deuxième écran s'étendant axialement, il pourra être prévu que ce deuxième écran s'étende sensiblement dans le prolongement des plaques portées en périphérie dudit stator. Le deuxième écran peut alors présenter une forme de couronne annulaire, et être fixé sur le stator ou directement sur la platine. Là encore, il est avantageux que le deuxième écran soit réalisé en un matériau conducteur électriquement, par exemple en aluminium.

La présente invention concerne également un système de chauffage, de ventilation et/ou de climatisation d'un véhicule automobile comprenant au moins un dispositif de pulsion d'air conforme à ce qui vient d'être décrit précédemment.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- la figure 1 est une représentation éclatée en perspective d'un dispositif de pulsion d'air selon l'invention ;
- la figure 2 illustre schématiquement un dispositif de pulsion d'air comportant selon l'invention des moyens de confinement radiaux des rayonnements électromagnétiques ;
- la figure 3 est une vue en perspective d'un stator équipant un moteur électrique dans un dispositif de pulsion d'air selon l'invention ;
- la figure 4 est une vue partielle de dessus du stator de la figure 3 ;
- la figure 5 illustre schématiquement un dispositif de pulsion d'air comportant selon l'invention des moyens de confinement radiaux des rayonnements électromagnétiques et des moyens de confinement axiaux, à un écran, de ces mêmes rayonnements selon un premier mode de réalisation ;
- la figure 6 est une vue en perspective d'un stator et de moyens de confinement axiaux à deux écrans, selon une première variante de réalisation ;
- la figure 7 illustre schématiquement un dispositif de pulsion d'air comportant selon l'invention des moyens de confinement radiaux des rayonnements électromagnétiques et des moyens de confinement axiaux, à deux écrans, de ces mêmes rayonnements selon une deuxième variante de réalisation ;
- la figure 8 illustre schématiquement un dispositif de pulsion d'air comportant selon l'invention des moyens de confinement radiaux des rayonnements électromagnétiques et des moyens de confinement axiaux, à deux écrans, de ces mêmes rayonnements selon une troisième variante de réalisation ; et
- la figure 9 est une vue en perspective d'un détail du dispositif de la figure 8.

Un dispositif de pulsion d'air 1, qui permet d'aspirer et/ou de souffler de l'air, comporte au moins un moteur électrique à commutation électronique 2, apte à entraîner en rotation une roue de ventilation 4, de type ici à ailettes 6, par l'intermédiaire d'un arbre de sortie 8 du moteur électrique. Le dispositif comporte en outre au moins un moyen support 10 intégrant plusieurs fonctions parmi lesquelles le support du moteur électrique 2, le refroidissement des composants dudit dispositif et le support d'une carte électronique de commande 12 dudit moteur électrique.

Le moteur électrique comporte principalement un stator 14 inducteur et un rotor 16 induit, porteur de l'arbre de sortie 8 apte à entraîner la roue de ventilation 4. Le stator 14 est rendu solidaire du moyen support 10 du moteur, et le rotor 16 est agencé autour du stator 14 pour être entraîné en rotation sous l'effet des champs magnétiques générés par le bobinage et les aimants associés au rotor et au stator.

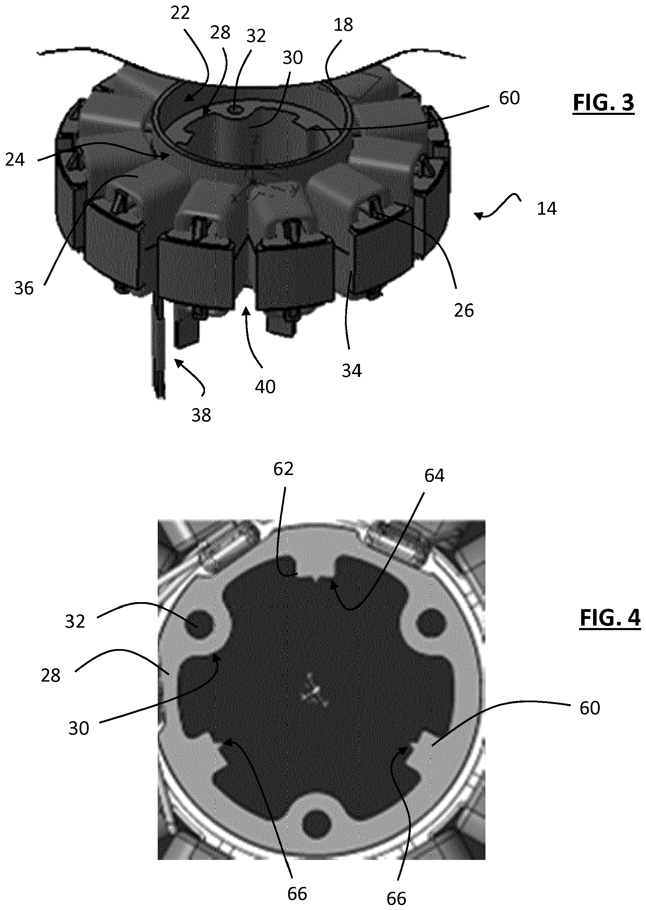

Tel que cela est visible sur la figure 3, le stator 14 présente une forme annulaire avec une paroi centrale 18 qui délimite le contour d'un alésage interne 20. La paroi centrale présente une face interne 22 tournée vers l'alésage interne et une face externe 24 prolongée par une pluralité de dents 26 agencées radialement en étoile.

L'alésage interne 20 du stator présente des parties distinctes par modification du diamètre interne de la paroi centrale délimitant ledit alésage interne, des parties de plus grand diamètre s'étendant depuis les bords d'extrémités axiales de la paroi centrale jusqu'à un bord d'épaulement 28 délimitant une partie centrale de l'alésage interne de plus petit diamètre. Dans cette partie centrale, le stator présente au moins un bossage axial 30 disposé en saillie de la face interne, ledit bossage étant percé axialement d'un trou de fixation 32 tel qu'il sera décrit ci-après.

Les dents 26 sont formées par une paroi droite, dont une extrémité radiale proximale est solidaire de la paroi centrale 18 du stator 14 et dont une extrémité radiale distale libre est prolongée par une plaque 34 qui s'étend sur toute la hauteur du stator et qui est plus large que la paroi droite, afin de former paroi de butée pour le bobinage amené à être entouré autour de la paroi droite des dents. Chaque plaque est recouverte à l'opposé de la paroi droite par une superposition de différentes couches de tôle, collées les unes sur les autres.

Le stator 14 comporte un bobinage d'excitation composé de plusieurs phases, comportant chacune au moins un enroulement de fil 36, dont les sorties sont raccordées électriquement à des moyens d'alimentation ici non représentés (seuls les moyens de raccordement 38 étant visibles sur la figure 3).

Dans un mode de réalisation particulier, le stator comporte douze dents bobinées en triphasé. L'enroulement de fil est réalisé autour des dents, chaque dent portant un élément de bobinage. Et tel qu'illustré sur la figure 3, les plaques 34 portées à l'extrémité des dents et les couches métalliques qui y sont collées sont dimensionnées pour prévoir une zone de passage 40 entre elles apte à laisser la place nécessaire pour réaliser l'enroulement du fil autour des dents.

Le rotor 16 présente une forme de cloche, avec une couronne annulaire 42 et une paroi de fermeture 44 disposée à une extrémité de ladite couronne. La paroi de fermeture peut prendre une forme plane sensiblement perpendiculaire à l'axe de la couronne ou bien une forme incurvée en dégagement de la couronne, et elle porte en son centre l'arbre de sortie moteur 8.

La couronne 42 présente un diamètre supérieur au diamètre extérieur du stator, de sorte que le rotor peut venir en recouvrement du stator. La couronne présente une face interne qui est tournée vers le stator dans cette position de recouvrement, et au moins un aimant permanent 46 est disposé sur cette face interne de la couronne du rotor.

Lorsque le moteur est assemblé, le stator 14 est disposé dans le corps du rotor 16 délimité par la couronne 42. Le rotor et le stator sont ainsi agencés pour que l'aimant permanent 46 porté par le rotor 16 soit constamment disposé dans le champ magnétique généré par les bobines du stator 14 lorsque celles-ci sont alimentées en courant, de manière à générer un mouvement de rotation du rotor autour du stator.

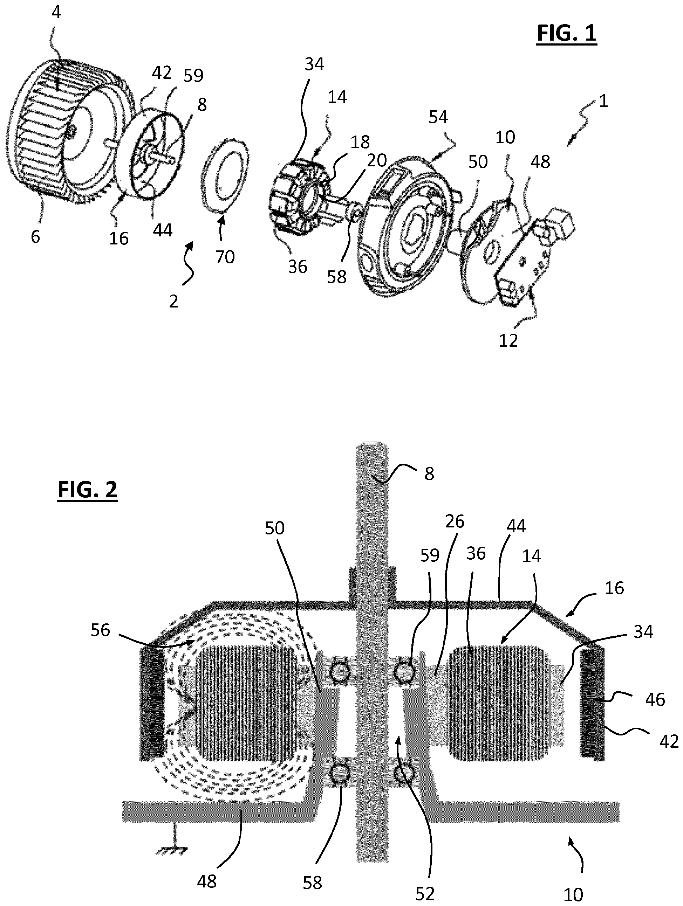

Dans le dispositif de pulsion d'air 1 comportant le moteur électrique 2 selon l'invention, le stator 14 et le rotor 16 sont agencés de sorte que la paroi de fermeture 44 du rotor est tournée vers la roue de ventilation 4 et que le stator 14 est disposé en regard du moyen support 10. Ce dernier présente la forme d'une platine 48 et d'un fût 50 disposé en saillie de la platine et présentant un canal interne 52 débouchant sensiblement au centre de la platine, et il est fixé par rapport à la structure du véhicule, ici par l'intermédiaire d'un bâti 54 illustré sur la figure 1.

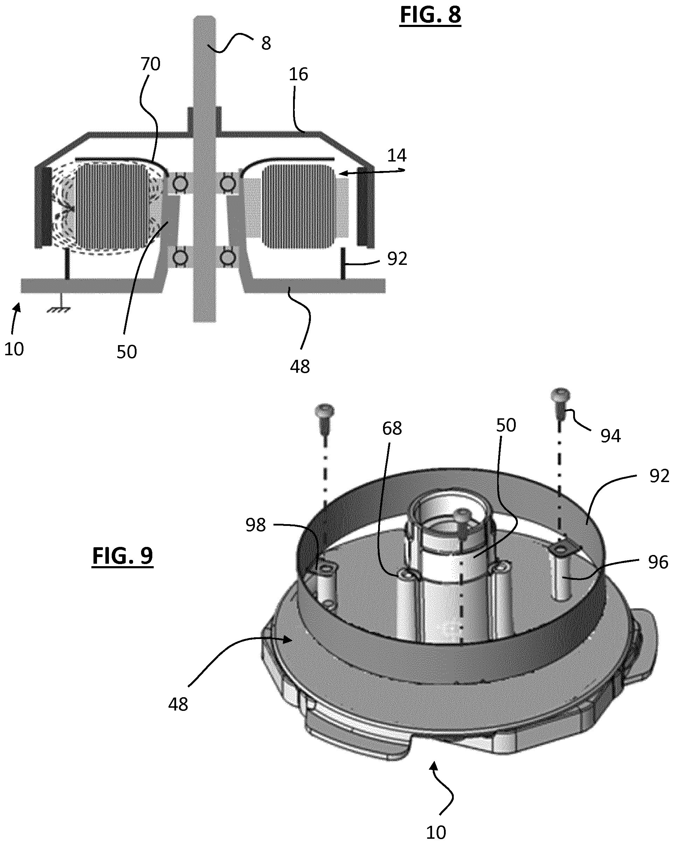

La platine 48 s'étend dans un plan sensiblement perpendiculaire à l'axe de révolution du canal interne du fût 50. Le fût, sensiblement cylindrique, est apte à être logé dans l'alésage interne 20 du stator 14 et à recevoir l'arbre de sortie moteur 8 solidaire du rotor 16, de sorte que l'on comprend que ce moyen support 10 assure le positionnement correct du rotor 16 par rapport au stator 14. On peut observer sur les figures 1, 2, 6, 8 et plus clairement sur la figure 9, que le fût 50 et la platine 48 forment une pièce monobloc, étant entendu que le moyen support est monobloc dès lors que la séparation du fût et de la platine entraîne une destruction de l'un ou l'autre de ces composants. La platine 48 présente sur les figures une forme discoïdale mais on comprend que celui-ci peut prendre d'autres formes, par exemple rectangulaire, carrée, elliptique, etc.

La platine 48 du moyen support forme un dissipateur thermique porteur d'une carte électronique de commande 12, notamment de l'alimentation des bobines du stator. La carte électronique de commande est disposée sur la face de la platine 48 orientée à l'opposé du fût 50.

De façon préférentielle, le moyen support 10 est en métal. Ainsi, la platine 48 faisant office de dissipateur thermique peut refroidir efficacement l'organe électronique par conduction thermique. De plus, le fait que le moyen support soit réalisé en métal permet de bloquer des rayonnements électromagnétiques émis par l'organe électronique, ces rayonnements pouvant perturber le fonctionnement du moteur électrique. En outre, le fait que le moyen support soit en métal permet de relier le stator 14 à la masse par l'intermédiaire du moyen support 10. En effet, la platine 48 du moyen support 10 est fixée par rapport à la structure du véhicule, via ici le bâti 54, de sorte que le moyen support est considéré comme relié électriquement à la terre. Préférentiellement, le moyen support est en aluminium, de telle sorte que l'on associe pour cette pièce des caractéristiques de légèreté et de bonne conduction thermique.

Tel que cela est notamment visible sur les figures 2, 5, 7 et 8, le stator 14 est figé sur le moyen support 10 et le rotor 16 est agencé pour tourner autour du stator 14. Notamment, le stator est disposé autour du fût 50, en étant au contact de la face externe du fût, tandis que le rotor 16 est reçu, par l'intermédiaire de l'arbre de sortie 8 dont il est solidaire, dans le canal interne 52 du fût. L'alimentation électrique des fils de bobine crée des champs magnétiques 56, illustrés à titre d'exemple pour un enroulement autour d'une dent sur les figures 2 à 3, qui force la rotation du rotor entraîné sous l'effet de l'aimant permanent 46 qu'il porte. Il en résulte un entraînement de l'arbre de sortie 8 du moteur qui tel qu'illustré est porté par le rotor 16 et qui est monté à rotation à l'intérieur du fût 50 du moyen support par l'intermédiaire de roulements.

Deux roulements 58, 59 sont insérés dans le canal interne 52 du fût 50 pour servir de guide de rotation à l'arbre de sortie 8 du moteur entraîné par ailleurs en rotation par le rotor 16. Ces roulements peuvent être des roulements à billes, tel qu'illustré schématiquement, mais on comprendra qu'ils pourraient prendre la forme de roulements à rouleaux, à aiguilles, ou autres...

La roue de ventilation 4 du dispositif de pulsion d'air 1 est rendu solidaire de l'extrémité libre de l'arbre de sortie 8 du moteur qui s'étend à l'opposé du stator 14 et du moyen support 10, et elle comporte, disposées à sa périphérie, une pluralité d'ailettes 6. La rotation du rotor entraîne en rotation la roue qui contribue à produire de l'air pulsé par l'intermédiaire des ailettes.

Il est particulièrement notable selon l'invention que le moteur électrique 2 formé par le rotor 16 et le stator 14 comporte en outre des moyens de confinement pour éviter la propagation des rayonnements électromagnétiques à l'extérieur du moteur et du dispositif de pulsion d'air.

Notamment le moteur comporte des moyens de confinement radiaux, c'est-à-dire des moyens permettant d'éviter la propagation radiale de ces rayonnements électromagnétiques, perpendiculairement à l'axe de l'arbre de sortie du moteur.

La face interne 22 de la paroi centrale 18 dudit stator est en contact avec le fût 50 agencé en saillie de la platine 48, étant entendu que la pièce monobloc formée par le fût 50 et la platine 48 est métallique et reliée à un potentiel électrique sensiblement nul. Il en résulte que les couches métalliques disposées sur les plaques 34 sur le pourtour du stator 14 sont portées au potentiel nul et forment, par l'équivalent d'une cage de Faraday, les moyens de confinement radiaux.

Afin que ces moyens de confinement radiaux soient efficaces, il convient de s'assurer de la correcte connexion électrique au potentiel nul des plaques 34 et donc s'assurer du bon contact entre le stator 14 et le moyen support 10.

Sur les figures 3 et 4, on a illustré des moyens pour s'assurer de ce bon contact, ceci étant notamment obtenu par le fait que la face interne 22 de la paroi centrale 18 définissant l'alésage interne 20 du stator 14 présente au moins une nervure 60 qui s'étend radialement vers l'intérieur de cet alésage interne 20. Cette nervure 60 présente deux faces latérales 62 prolongeant chacune ladite face interne de la paroi centrale 18 et une face de contact 64 apte à être au contact du fût du moyen support. La face de contact 64 est incurvée de telle sorte que la courbure de la face de contact est définie par un cercle centré sur l'axe de l'alésage interne 20. On peut prévoir que l'alésage interne 20 du stator comporte trois de ces nervures 60, disposées selon une répartition angulaire régulière, à 120° dans ce cas. On crée ainsi un siège de section circulaire pour recevoir le fût cylindrique du moyen support.

Afin d'assurer encore plus efficacement le contact entre le stator et le fût du moyen support, il peut en outre être prévu de modifier avantageusement au moins une nervure 60, notamment pour la prolonger, sensiblement en direction de l'axe de l'alésage interne, par un ergot 66 qui s'étend en saillie de la face de contact 64. Avantageusement, tel qu'illustré, cet ergot 66 peut prendre la forme d'une pointe suffisamment rigide pour ne pas casser à l'emmanchement du fût dans l'alésage interne du stator, et chacune de ces nervures 60 peut porter un tel ergot 66.

Selon une variante non représentée, on pourra prévoir que l'alésage interne 20 du stator présente une forme tronconique, telle que l'alésage présente un plus grand diamètre à son extrémité tournée vers la platine 48 qu'à son extrémité tournée vers le rotor, et que le profil externe du fût 50 du moyen support sur lequel vient s'emmancher le stator 14 présente également une forme tronconique. De la sorte, on s'assure d'un contact sur toute la périphérie du fût lors de l'emmanchement du stator sur le moyen support.

On pourra également prévoir que le fût 50 présente axialement deux tronçons distincts en ce qu'un premier tronçon, dans le prolongement direct de la platine, présente un diamètre externe plus important que le deuxième tronçon prolongeant le premier tronçon jusqu'à l'extrémité libre du fût. De la sorte, un épaulement est formé entre les deux tronçons et le stator peut venir prendre appui sur cet épaulement lorsqu'il est enfilé autour du fût. On pourra voir un tel épaulement 68 illustré sur la figure 9 par exemple. Un tel agencement est à combiner avec la présence des nervures 60, éventuellement équipées des ergots 66 décrits précédemment, pour assurer plusieurs zones de contact et assurer ainsi une bonne connexion électrique entre le moyen support et le stator.

On va maintenant décrire des modes de réalisation particuliers en ce que les moyens de confinement consistent en la présence d'au moins un écran additionnel réalisé dans un matériau conducteur, notamment en aluminium, et relié électriquement à la masse. On peut notamment prévoir de disposer un tel écran d'un côté ou de l'autre du stator 14, ou des deux côtés.

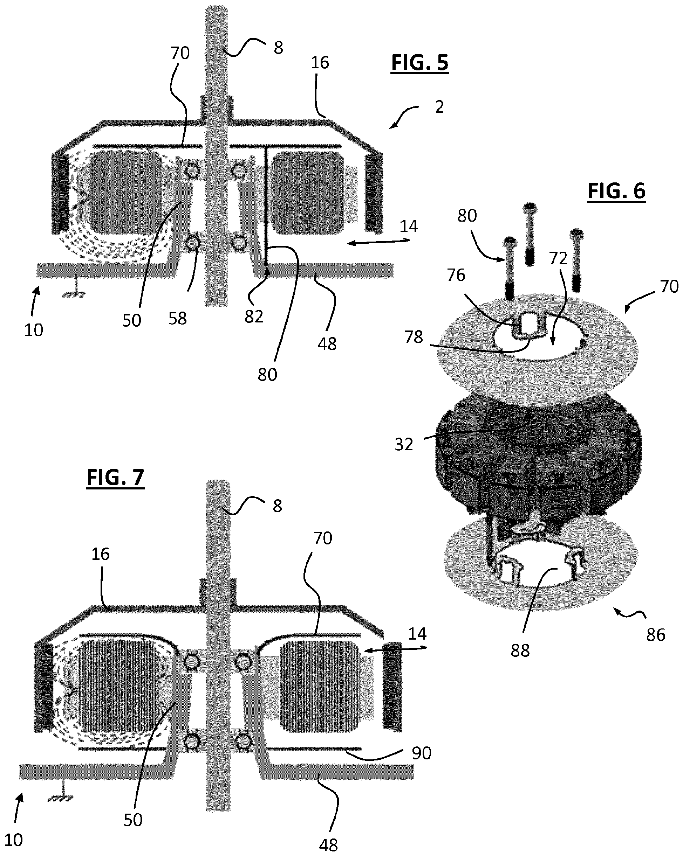

Sur la figure 5, le moteur 2 comporte un premier écran 70, disposé transversalement à l'arbre de sortie 8, entre le stator 14 et le rotor 16, pour former moyen de confinement axial des rayonnements électromagnétiques. Afin de former un moyen de confinement efficace, le premier écran 70 s'étend transversalement sur tout le diamètre du stator.

Tel qu'illustré sur la figure 6, on peut prévoir que le premier écran 70 présente une forme annulaire sensiblement plane, percée en son centre d'un alésage 72 pour être traversé par l'arbre de sortie 8 du moteur qui s'étend entre le rotor 16 et le stator 14.

Le premier écran 70 est fixé sur le stator 14 sensiblement au centre de l'écran. Et les moyens de fixation prévus, par vissage, permettent en outre la mise à la masse de ce premier écran 70. A cet effet, le premier écran 70 comporte au moins une patte 76 qui prolonge sensiblement perpendiculairement le bord délimitant l'alésage central 72 du premier écran. L'extrémité libre de cette patte présente un bord d'appui 78 plié perpendiculairement au reste de la patte, pour venir au contact du stator, et plus particulièrement du bord d'épaulement 28 de l'alésage interne 20 du stator 14, lorsque le premier écran 70 est en position de recouvrement de ce stator 14. Le premier écran est agencé angulairement pour que le bord d'appui 78 de cette patte soit agencé autour d'un trou de fixation 32 réalisé dans l'épaisseur du stator.

Le bord d'appui 78 est agencé pour laisser passage au corps d'une vis de fixation 80, qui s'étend sensiblement parallèlement à l'arbre de sortie moteur, pour l'insertion de cette vis dans le trou de fixation 32 correspondant, et pour être plaqué contre le bord d'épaulement 28 par la tête de vis.

Tel qu'illustré, le premier écran 70 comporte trois pattes de fixation 76, régulièrement réparties à 120° sur le pourtour de l'alésage central de l'écran, et il est prévu autant de trous de fixation 32 pour que le premier écran soit plaqué contre le stator par trois vis de fixation 80.

Avantageusement, il est prévu d'utiliser les vis de fixation 80 pour la mise à la masse électrique du premier écran 70, cette mise à la masse étant nécessaire pour que le premier écran soit apte à limiter la propagation des rayonnements électromagnétiques.

Le premier écran 70 est mis à la masse par l'intermédiaire d'au moins une des vis de fixation 80, qui traverse à cet effet le stator 14 pour venir en prise de l'autre côté du stator, sur la platine 48. Tel qu'illustré sur la figure 5, cette vis de fixation 80 traverse un trou de fixation lisse réalisé à travers le stator 14 et elle vient en prise dans un trou taraudé 82 réalisé dans la platine. On comprend que chacune des trois vis de fixation peut présenter un tel agencement, ou bien que seule une des vis de fixation 80 traverse le stator 14 pour venir en prise sur la platine 48, les deux autres vis de fixation étant plus courtes de manière à coopérer avec un trou de fixation 32 taraudé dans le corps du stator. La connexion électrique de l'écran et sa mise à la masse se fait par l'intermédiaire de la platine 48 métallique, de la au moins une vis de fixation métallique 80 en prise dans la platine, et du contact entre la patte 76 de l'écran et la tête de vis.

On va maintenant décrire, notamment en se référant aux figures 6 à 8, un mode de réalisation particulier en ce que l'on prévoit deux écrans pour former une couverture plus efficace du stator. Un premier écran 70 est disposé en couverture du stator 14 tel que cela a été précisé précédemment, entre le rotor 16 et le stator 14, et un deuxième écran est disposé du côté axial du stator 14 opposé au côté couvert par ledit premier écran 70, c'est à dire entre ledit stator 14 et la platine 48. Ce deuxième écran est également réalisé en un matériau conducteur électriquement, par exemple en aluminium, comme le premier écran.

Du fait de la présence de la platine, ce deuxième écran peut présenter plusieurs variantes. Dans une première variante, illustrée sur la figure 6, le deuxième écran 86 s'étend transversalement à l'axe de l'arbre de sortie moteur et il présente une forme similaire à celle du premier écran décrit précédemment, en étant son symétrique par rapport au stator. De la sorte, le deuxième écran s'étend radialement sur tout le diamètre du stator, et il présente une forme annulaire sensiblement plane, percée en son centre pour être traversée par le fût du moyen support. Le deuxième écran comporte comme le premier écran des pattes de fixation 88 pour être vissé sur le stator. Au moins une des vis de fixation 80 évoquée précédemment est filetée sur une hauteur suffisamment importante pour venir coopérer avec un trou taraudé dans la platine et être en prise avec un écrou ici non représenté qui plaque le deuxième écran 86 sur le stator. On réalise ainsi la mise à la masse, au même potentiel électrique sensiblement nul, du premier écran 70 et du deuxième écran 86 et on s'assure d'un confinement axial optimal des rayonnements électromagnétiques.

Dans une deuxième variante, illustrée sur la figure 7, le deuxième écran 90 est, tel que cela vient d'être décrit, transversal à l'axe de l'arbre de sortie moteur 8, et il s'étend radialement sur tout le diamètre du stator 14, en présentant une forme annulaire sensiblement plane. Toutefois, le deuxième écran est sensiblement différent du premier écran en ce qu'il est emmanché en son alésage central sur le fût 50 du moyen support 10. La mise à la masse du deuxième écran 90 se fait par contact avec le fût 50 solidaire de la platine 48 elle-même reliée à la terre. On comprend qu'une telle variante de réalisation n'est rendue possible que si le fût 50 et la platine 48 du moyen support 10 forment une unique et même pièce reliée à la terre. Dans ce contexte, où le stator est emmanché sur un fût connecté au potentiel électrique nul, on peut observer qu'il a été représenté sur les figures 7 et 8 un premier écran rendu solidaire du stator et donc mis à la masse sans besoin d'avoir un moyen traversant pour être en prise sur la platine.

Dans une troisième variante, illustrée sur les figures 8 et 9, le deuxième écran 92 peut s'étendre axialement, sensiblement dans le prolongement des plaques 34 portées en périphérie dudit stator 14, le deuxième écran 92 présentant alors une forme de couronne annulaire. Dans ce cas, il est possible de fixer le deuxième écran soit sur le stator 14, soit sur la platine 48, ce dernier cas étant illustré. La fixation du deuxième écran 92 se fait alors par des secondes vis de fixation 94 qui coopèrent avec des alésages taraudés correspondants dans des fûts secondaires 96 agencés en saillie de la platine 48 autour du fût 50. Des pattes de fixation 98, prolongeant perpendiculairement la couronne, assurent la fixation du deuxième écran et la mise à la masse.

La description qui précède vise à expliquer comment l'invention permet d'atteindre les objectifs qu'elle s'est fixés et notamment de proposer un dispositif de pulsion d'air qui confine les rayonnements électromagnétiques, par l'élaboration de moyens de confinement simples à fabriquer, simples à monter et particulièrement efficaces. Il est notamment notable qu'un confinement est rendu possible dans toutes les directions, avec aussi bien un confinement radial qu'un confinement axial, ce confinement axial étant réalisé entre le rotor et le stator, et entre le stator et la platine.

Toutefois, l'invention n'est pas limitée aux seuls dispositifs de pulsion d'air conformes aux modes de réalisation explicitement décrits en regard des figures 1 à 9. A titre d'exemple, on pourra, sans sortir du cadre de l'invention, modifier la forme de l'écran dès lors qu'il forme bien une partie d'un caisson fermant de façon étanche au moins un côté du stator. On comprendra également que dans une variante de réalisation, les moyens de fixation de l'écran sur le stator ou sur la platine pourraient présenter une forme différente, notamment en étant distincts des moyens de la mise à la masse de l'écran.

## Revendications

1. Dispositif de pulsion d'air comportant un moteur électrique (2) à commutation électronique, ledit moteur comportant un stator (14) et un rotor (16) agencé autour du stator dans lequel ledit stator est en contact avec un moyen support (10) du stator, ledit moyen support étant un conducteur électrique relié à une masse électrique,
et dans lequel un écran (70, 86, 90, 92) est disposé au voisinage du stator, ledit écran (70, 86, 90, 92) étant également connecté électriquement à la masse électrique, ledit stator (14) présentant une forme annulaire avec une paroi centrale (18) qui délimite le contour d'un alésage interne (20) par lequel passe un arbre de sortie moteur (8),
dans lequel ledit écran (70) est disposé transversalement à l'arbre de sortie (8), entre le rotor (16) et le stator (14),
**caractérisé en ce que** la face interne (22) de la paroi centrale (18) définissant ledit alésage interne (20) présente au moins une nervure (60) qui s'étend radialement vers l'intérieur de l'alésage,
et **en ce que** la au moins une nervure (60) est prolongée, sensiblement en direction de l'axe de l'alésage interne (20), par un ergot (66).

2. Dispositif de pulsion d'air selon la revendication 1, **caractérisé en ce que** ladite au moins une nervure (60) présente deux faces latérales (62) prolongeant chacune ladite face interne (22) de la paroi centrale et une face de contact (64) apte à être au contact du moyen support (10).

3. Dispositif de pulsion d'air selon l'une des revendications précédentes, **caractérisé en ce que** ledit moyen support (10) est formé d'une pièce unique comportant un fût (50), autour duquel est monté le stator (14), et une platine (48) disposée transversalement d'un côté du stator opposé au côté dudit rotor et en saillie duquel s'étend ledit fût (50).

4. Dispositif de pulsion d'air selon la revendications 1, **caractérisé en ce que** ledit écran (70) présente une forme annulaire sensiblement plane, percée en son centre d'un alésage (72) pour être traversée par l'arbre de sortie (8) du moteur.

5. Dispositif de pulsion d'air selon la revendication 1 ou 4, **caractérisé en ce que** ledit écran (70) est fixé sur le stator (14), par au moins une vis de fixation (80) apte à coopérer avec un trou (32) formé dans le stator.

6. Dispositif de pulsion d'air selon la revendication précédente, **caractérisé en ce que** l'alésage interne (20) du stator (14) présente deux parties distinctes par modification du diamètre interne de la paroi centrale (18) délimitant ledit alésage interne, une première partie de plus grand diamètre s'étendant depuis le bord disposé axialement au voisinage de l'écran jusqu'à un bord d'épaulement (28) délimitant une deuxième partie de plus petit diamètre, ledit trou (32) coopérant avec la vis de fixation étant formé dans le bord d'épaulement.

7. Dispositif de pulsion d'air selon la revendication 5 ou 6, **caractérisé en ce que** l'écran (70) est connecté à la masse électrique par l'intermédiaire de ladite au moins une vis de fixation (80) qui s'étend sensiblement parallèlement à l'arbre de sortie (8) du moteur, en traversant ledit stator (14) pour venir en prise sur ledit moyen support (10).

8. Dispositif de pulsion d'air selon l'une des revendications 5 à 7, **caractérisé en ce que** le stator (14) présente au moins un bossage axial (30) disposé en saillie de la face interne (22) de la paroi centrale (18) définissant l'alésage interne (20) dudit stator, ledit bossage étant percé axialement du trou de fixation (32) apte à être traversé par la au moins une vis de fixation (80).

9. Dispositif de pulsion d'air selon l'une des revendications précédentes, **caractérisé en ce que** ledit écran (70) est un premier écran formant partie d'une couverture du stator (14) comportant en outre un deuxième écran (86, 90, 92), disposé en couverture du stator du côté axial du stator opposé au côté couvert par ledit premier écran, entre ledit stator et le moyen support (10).

10. Dispositif de pulsion d'air selon la revendication 9, lorsqu'elle dépend de la revendication 4, **caractérisé en ce que** ledit deuxième écran (92) s'étend axialement, entre le stator (14) et la platine (48) du moyen support (10).

11. Dispositif de pulsion d'air selon la revendication précédente, **caractérisé en ce que** ledit deuxième écran (92) s'étend sensiblement dans le prolongement de plaques (34) portées en périphérie dudit stator (14).

12. Système de chauffage, de ventilation et/ou de climatisation d'un véhicule automobile comprenant au moins un dispositif de pulsion d'air (1) conforme à l'une quelconque des revendications précédentes.

## Patentansprüche

1. Luftpulsvorrichtung, welche einen elektronisch kommutierten Elektromotor (2) umfasst, wobei der Motor einen Stator (14) und einen um den Stator herum angeordneten Rotor (16) umfasst, wobei der Stator mit einem Haltemittel (10) des Stators in Kontakt steht, wobei das Haltemittel ein elektrischer Leiter ist, der mit einer elektrischen Masse verbunden ist,
und wobei ein Schirm (70, 86, 90, 92) in der Nähe des Stators angeordnet ist, wobei der Schirm (70, 86, 90, 92) ebenfalls mit der elektrischen Masse elektrisch verbunden ist, wobei der Stator (14) eine ringförmige Gestalt mit einer zentralen Wand (18) aufweist, welche den Umriss einer Innenbohrung (20) begrenzt, durch welche eine Motorabtriebswelle (8) hindurchführt,
wobei der Schirm (70) quer zu der Abtriebswelle (8) zwischen dem Rotor (16) und dem Stator (14) angeordnet ist,
**dadurch gekennzeichnet, dass** die Innenseite (22) der zentralen Wand (18), welche die Innenbohrung (20) definiert, wenigstens eine Rippe (60) aufweist, welche sich radial zum Inneren der Bohrung hin erstreckt,
und dadurch, dass die wenigstens eine Rippe (60), im Wesentlichen in Richtung der Achse der Innenbohrung (20), durch einen Ansatz (66) verlängert ist.

2. Luftpulsvorrichtung nach Anspruch 1, **dadurch gekennzeichnet, dass** die wenigstens eine Rippe (60) zwei seitliche Flächen (62), die jeweils die Innenseite (22) der zentralen Wand verlängern, und eine Kontaktfläche (64), die geeignet ist, mit dem Haltemittel (10) in Kontakt zu stehen, aufweist.

3. Luftpulsvorrichtung nach einem der vorhergehenden Ansprüche, **dadurch gekennzeichnet, dass** das Haltemittel (10) von einem einzigen Teil gebildet wird, das einen Schaft (50), um den herum der Stator (14) angebracht ist, und eine Platte (48), die auf einer der Seite des Rotors gegenüberliegenden Seite des Stators quer angeordnet ist und von der aus sich der Schaft (50) vorstehend erstreckt, umfasst.

4. Luftpulsvorrichtung nach Anspruch 1, **dadurch gekennzeichnet, dass** der Schirm (70) eine im Wesentlichen ebene ringförmige Gestalt aufweist, die in ihrer Mitte mit einer Bohrung (72) versehen ist, um von der Abtriebswelle (8) des Motors durchquert zu werden.

5. Luftpulsvorrichtung nach Anspruch 1 oder 4, **dadurch gekennzeichnet, dass** der Schirm (70) an dem Stator (14) durch wenigstens eine Befestigungsschraube (80) befestigt ist, die geeignet ist, mit einem in dem Stator ausgebildeten Loch (32) zusammenzuwirken.

6. Luftpulsvorrichtung nach dem vorhergehenden Anspruch, **dadurch gekennzeichnet, dass** die Innenbohrung (20) des Stators (14) durch eine Änderung des Innendurchmessers der zentralen Wand (18), welche die Innenbohrung begrenzt, zwei verschiedene Teile aufweist, wobei sich ein erster Teil mit größerem Durchmesser von dem Rand, der axial in der Nähe des Schirms angeordnet ist, bis zu einem Schulterrand (28) erstreckt, der einen zweiten Teil mit kleinerem Durchmesser begrenzt, wobei das mit der Befestigungsschraube zusammenwirkende Loch (32) in dem Schulterrand ausgebildet ist.

7. Luftpulsvorrichtung nach Anspruch 5 oder 6, **dadurch gekennzeichnet, dass** der Schirm (70) mit der elektrischen Masse über die wenigstens eine Befestigungsschraube (80) verbunden ist, welche sich im Wesentlichen parallel zur Abtriebswelle (8) des Motors erstreckt, wobei sie den Stator (14) durchquert, um an dem Haltemittel (10) in Eingriff zu gelangen.

8. Luftpulsvorrichtung nach einem der Ansprüche 5 bis 7, **dadurch gekennzeichnet, dass** der Stator (14) wenigstens eine axiale Erhebung (30) aufweist, die von der Innenseite (22) der zentralen Wand (18), welche die Innenbohrung (20) definiert, vorstehend angeordnet ist, wobei die Erhebung axial mit dem Befestigungsloch (32) versehen ist, das geeignet ist, von der wenigstens einen Befestigungsschraube (80) durchquert zu werden.

9. Luftpulsvorrichtung nach einem der vorhergehenden Ansprüche, **dadurch gekennzeichnet, dass** der Schirm (70) ein erster Schirm ist, der einen Teil einer Abdeckung des Stators (14) bildet, der außerdem einen zweiten Schirm (86, 90, 92) umfasst, der als Abdeckung des Stators auf der axialen Seite des Stators, die der von dem ersten Schirm abgedeckten Seite gegenüberliegt, zwischen dem Stator und dem Haltemittel (10) angeordnet ist.

10. Luftpulsvorrichtung nach Anspruch 9, wenn abhängig von Anspruch 4, **dadurch gekennzeichnet, dass** sich der zweite Schirm (92) axial zwischen dem Stator (14) und der Platte (48) des Haltemittels (10) erstreckt.

11. Luftpulsvorrichtung nach dem vorhergehenden Anspruch, **dadurch gekennzeichnet, dass** sich der zweite Schirm (92) im Wesentlichen in der Verlängerung von Platten (34) erstreckt, die der Stator (14) am Umfang trägt.

12. Heizungs-, Belüftungs- und/oder Klimatisierungssystem eines Kraftfahrzeugs, welches wenigstens eine Luftpulsvorrichtung (1) gemäß einem der vorhergehenden Ansprüche umfasst.

## Claims

1. Air pulsing device comprising an electronically switched electric motor (2), said motor comprising a stator (14) and a rotor (16) arranged around the stator, in which said stator is in contact with a support means (10) of the stator, said support means being an electrical conductor linked to an electrical ground, and in which a shield (70, 86, 90, 92) is positioned in the vicinity of the stator, said shield (70, 86, 90, 92) being also connected electrically to the electrical ground, said stator (14) having an annular form with a central wall (18) which delimits the outline of an internal bore (20) through which passes a motor output shaft (8), in which said shield (70) is positioned transversely to the output shaft (8), between the rotor (16) and the stator (14), **characterized in that** the internal face (22) of the central wall (18) defining said internal bore (20) has at least one rib (60) which extends radially toward the interior of the bore, and **in that** the at least one rib (60) is prolonged, substantially toward the axis of the internal bore (20), by a pin (66).

2. Air pulsing device according to Claim 1, **characterized in that** said at least one rib (60) has two lateral faces (62) each prolonging said internal face (22) of the central wall and a contact face (64) suitable for being in contact with the support means (10).

3. Air pulsing device according to either of the preceding claims, **characterized in that** said support means (10) is formed by a single piece comprising a sleeve (50), around which the stator (14) is mounted, and a plate (48) positioned transversely on one side of the stator opposite the side of said rotor and protruding from which extends said sleeve (50).

4. Air pulsing device according to Claim 1 **characterized in that** said shield (70) has a substantially flat annular form, pierced at its centre by a bore (72) to be passed through by the output shaft (8) of the motor.

5. Air pulsing device according to Claims 1 to 4, **characterized in that** said shield (70) is fixed onto the stator (14), by at least one fixing screw (80) capable of cooperating with a hole (32) formed in the stator.

6. Air pulsing device according to the preceding claim, **characterized in that** the internal bore (20) of the stator (14) has two distinct parts through modification of the internal diameter of the central wall (18) delimiting said internal bore, a first part of larger diameter extending from the edge positioned axially in the vicinity of the shield to a shoulder edge (28) delimiting a second part of smaller diameter, said hole (32) cooperating with the fixing screw being formed in the shoulder edge.

7. Air pulsing device according to Claim 5 or 6, **characterized in that** the shield (70) is connected to the electrical ground via said at least one fixing screw (80) which extends substantially parallel to the output shaft (8) of the motor, by passing through said stator (14) to engage on said support means (10).

8. Air pulsing device according to one of Claims 5 to 7, **characterized in that** the stator (14) has at least one axial boss (30) positioned protruding from the internal face (22) of the central wall (18) defining the internal bore (20) of said stator, said boss being pierced axially by the fixing hole (32) capable of being passed through by the at least one fixing screw (80).

9. Air pulsing device according to one of the preceding claims, **characterized in that** said shield (70) is a first shield forming part of a cover of the stator (14) furthermore comprising a second shield (86, 90, 92), positioned covering the stator on the axial side of the stator opposite the side covered by said first shield, between said stator and the support means (10).

10. Air pulsing device according to Claim 9, when it depends on Claim 4, **characterized in that** said second shield (92) extends axially, between the stator (14) and the plate (48) of the support means (10).

11. Air pulsing device according to the preceding claim, **characterized in that** said second shield (92) extends substantially in the extension of plates (34) borne at the periphery of said stator (14).

12. Heating, ventilation and/or air conditioning system of a motor vehicle comprising at least one air pulsing device (1) in accordance with any one of the preceding claims.
